# FASCICULE DE BREVET EUROPEEN

(11) **EP 2 535 259 B1**
(45) Date de publication et mention de la délivrance du brevet: **21.01.2015**
(21) Numéro de dépôt: 12171838.1
(22) Date de dépôt: 13.06.2012
(51) Int. Cl.: B63B 35/44, F24J 2/52, F24J 2/54

(54) **Réseau d'éléments photovoltaïques flottants**
Netz von schwimmenden Fotovoltaikelementen
Array of floating photovoltaic elements

(30) Priorité: 15.06.2011 CH 10042011
(43) Date de publication de la demande: 19.12.2012
(73) Titulaire: Planair SA, 2314 La Sagne (CH)
(72) Inventeur: Perret, Lionel, 2000 Neuchâtel (CH)
(74) Mandataire: P&TS SA (AG, Ltd.)

(56) Documents cités:
- EP-A1- 2 299 499
- US-A- 4 214 572
- US-A1- 2006 090 789

## Description

### Domaine technique

La présente invention concerne un réseau d'éléments photovoltaïques flottants agencé pour être déployé en milieu aquatique.

### Etat de la technique

Le déploiement de centrales photovoltaïques à grande échelle pose des problèmes liés au manque de terrains présentant une surface suffisante et en particulier au coût de ces terrains. Ces inconvénients ont poussé quelques acteurs du domaine photovoltaïques à orienter leurs installations vers des surfaces aquatiques à grande échelle telles que les océans, mers ou lacs.

Le concept d'« île solaire » est apparu. Ce type d'installation est notamment décrit dans le document CH700217.

Le document WO2008125154 décrit une structure cellulaire comportant des cellules photovoltaïques flottantes et reliées entre elles par des câbles. Les câbles permettent notamment de déplacer la structure entière. L'orientation des panneaux photovoltaïques se fait en les pivotant par rapport aux bouées au moyen d'un actuateur sur chaque cellule. Ces actuateurs rendent la structure coûteuse et davantage susceptible de défaillances.

Le document EP2299499 décrit une installation photovoltaïque flottante pouvant être ancrée au fond d'un lac de barrage au moyen de câbles de longueur variable en fonction du niveau d'eau. Les cellules photovoltaïques sont portées par des bouées propres à chaque cellule ou communes à une rangée de bouées. Elles sont inclinées d'un angle fixe. L'installation entière peut tourner afin de suivre le soleil. Cette installation présente l'inconvénient majeur de ne pas permettre de changer l'inclinaison des panneaux.

Le document WO10144955 décrit un ensemble de modules rectangulaires imperméables flottant supportant chacun un capteur solaire. Plusieurs modules sont fixés en lignes et chaque ligne peut être connectée électriquement au niveau de chaque module à une ou deux autres lignes afin de former un réseau. Chaque module comprend son propre système d'orientation du capteur solaire. Cette solution est également une structure complexe et coûteuse.

Les centrales photovoltaïques doivent s'adapter aux contraintes de la nature (ensoleillement, enneigement, etc.) et du milieu naturel spécifique dans lequel elles sont installées (zones d'ombre des montagnes, variations du niveau des lacs, température, etc.)

En dehors de ces systèmes déployés en milieu aquatique, il existe des systèmes terrestres permettant à des panneaux solaires d'être orientés de manière variable.

Le document JP2003329963 décrit une installation solaire thermique comportant plusieurs réflecteurs dont l'orientation peut être contrôlée au moyen de câbles, afin de faire converger les rayons solaires en un seul point. Un système de câbles complexe est nécessaire pour orienter simultanément les différents réflecteurs vers le même point. Ce système n'est pas adapté à des panneaux photovoltaïques qui ne sont pas réflecteurs et qui ne doivent tous être tournés dans la direction du soleil.

Ce système de support est conçu pour être fixé sur terre. Il n'est adapté qu'à un faible nombre de réflecteurs dont le poids est entièrement supporté par les câbles. Il présente en outre l'inconvénient de nécessiter plusieurs câbles et de supporter un nombre restreint de réflecteurs.

Le brevet américain US4214572 décrit un système collectant l'énergie solaire comprenant plusieurs collecteurs d'énergie solaire fixés à un cadre flottant sur l'eau et des moyens pour orienter les collecteurs en fonction de l'orientation du soleil. Chaque collecteur est fixé au cadre par un câble inférieur et par un câble supérieur au moyen d'un pivot à rotule. Un dispositif motorisé permet de modifier la longueur du câble en réponse à un capteur photoélectrique, afin de modifier l'inclinaison de la surface réfléchissante par rapport à l'horizontale et réfléchir la quantité maximum d'énergie solaire sur le dispositif d'absorption. Le cadre subit également une rotation afin de maintenir les surfaces réfléchissantes face au soleil. En cas d'intempérie, les réflecteurs peuvent être retournés, des gicleurs peuvent être prévus pour nettoyer les surfaces réfléchissantes. Ce système présente l'inconvénient d'être lié à un cadre rigide et nécessite par exemple des joints d'expansion à des intervalles appropriés pour compenser les expansions et contractions dues aux variations thermiques. Il ne peut pas s'adapter à des surfaces d'eau changeantes telles que les lacs de barrage. Un autre inconvénient de ce système est lié à l'utilisation du câble supérieur pour le pivotement d'une multitude de collecteurs et pour leur support. Cela nécessite une tension extrême du câble en particulier si le nombre de collecteurs est important. Il sera tendu aux extrémités du réseau mais incurvé vers le centre. Le pivotement des collecteurs placés au centre du réseau risque alors de ne pas se faire correctement. Un autre inconvénient de ce système réside dans le fait que le câble supérieur est placé plus haut que le collecteur. De ce fait, le réseau comporte une multitude de câbles positionnés au-dessus des collecteurs ce qui peut présenter un danger par exemple pour les oiseaux.

La demande internationale WO200901225 concerne un système collecteur d'énergie comprenant une plateforme flottante qui comprend une structure annulaire externe, une couverture flexible recouvrant une extrémité supérieure de la structure annulaire et définissant ainsi un volume interne, un compresseur permettant de créer une surpression du volume interne, des modules collecteurs d'énergie solaire, une structure supérieure placée au-dessus de la couverture supportant les modules, la plateforme pouvant tourner afin de suivre la position du soleil. Le système collecteur décrit dans cette demande nécessite une installation extrêmement complexe et coûteuse.

La demande de brevet US2006090789 décrit une structure flottante supportant des rangées de panneaux solaires. Les panneaux solaires sont pré-orientés avec un angle fixe (de préférence 20°). Cette structure présente l'inconvénient majeur de ne pas permettre le changement d'orientation des panneaux dès lors qu'ils sont installés.

La demande de brevet KR2009037020 concerne un dispositif de concentration de lumière pour une installation aquatique. Un module photovoltaïque est placé entre des bouées. Un dispositif de commande de l'inclinaison du module photovoltaïque comprend des tubes fonctionnant grâce un processus d'aspiration ou d'expiration d'air permettant d'élever ou d'abaisser le module photovoltaïque. L'installation est placée sur l'eau et fixée au moyen d'ancres sous-marines. Ce dispositif présente l'inconvénient de nécessiter une structure de tuyaux complexe et encombrante pour orienter les modules photovoltaïques.

Il existe donc un besoin d'un réseau d'éléments photovoltaïques qui permette d'éviter au moins un des désavantages des dispositifs connus mentionnés.

### Bref résumé de l'invention

Un but de la présente invention est de proposer un réseau d'éléments photovoltaïques flottants exempt des limitations des réseaux connus.

Un autre but de la présente invention est de proposer une solution alternative aux réseaux d'éléments photovoltaïques flottants existants.

Selon l'invention, ce but est atteint notamment au moyen d'un réseau d'éléments photovoltaïques flottants selon la revendication 1, et d'une méthode de positionnement d'un réseau d'éléments photovoltaïques flottants selon la revendication 14.

Cette solution possède notamment l'avantage par rapport à l'art antérieur de modifier l'orientation des éléments photovoltaïques flottants sans nécessiter impérativement de dispositif actuateur propre à chaque élément photovoltaïque.

Cette solution possède également l'avantage par rapport à l'art antérieur de présenter un réseau d'éléments photovoltaïques flottants qui s'adapte aux variations même importantes du niveau des lacs. Cette solution est ainsi en particulier adaptée aux lacs de barrage.

Le réseau d'éléments photovoltaïques flottants selon l'invention comprend au moins un élément photovoltaïque flottant et au moins un câble pour relier les éléments photovoltaïques flottants entre eux. Chaque élément photovoltaïque flottant comprend une bouée et une surface photovoltaïque fixée sur la bouée. Au moins une surface photovoltaïque peut pivoter autour d'un axe horizontal, sensiblement parallèle au câble, le câble permettant d'adapter l'angle de pivotement en modifiant sa tension.

Dans le contexte de l'invention, l'expression « sensiblement parallèle » signifie que l'angle entre l'axe de pivotement de la surface photovoltaïque et le câble peut être compris entre + 25° et - 25°, et de préférence entre + 10° et - 10°.

Le réseau d'éléments photovoltaïques flottants comporte avantageusement au moins deux éléments photovoltaïques adjacents reliés par une portion de câble de longueur variable en fonction de la position verticale de ces deux éléments. Ainsi, lorsqu'un de ces deux éléments, ou les deux éléments, se posent sur le fond d'un lac vide, la longueur de ces portions de câbles est adaptée de préférence automatiquement afin de tenir compte de la distance verticale entre ces deux éléments.

Le réseau d'éléments photovoltaïques flottants comporte avantageusement au moins un élément photovoltaïque relié à un point fixe au bord du plan d'eau par une portion de câble de longueur variable en fonction de la position verticale de cet élément. Ainsi, lorsque le niveau du lac descend, la longueur de cette portion de câble est adaptée de préférence automatiquement afin de tenir compte de la distance verticale variable entre le point fixe et l'élément photovoltaïque.

Dans le contexte de l'invention, on entend par surface photovoltaïque un ensemble comprenant un ou plusieurs panneaux photovoltaïques susceptibles de transformer l'énergie solaire en énergie électrique. Des panneaux photovoltaïques disponibles dans le commerce peuvent être utilisés comme panneaux photovoltaïques. Les différents panneaux photovoltaïques d'une surface photovoltaïque peuvent être disposés en dents de scie ou horizontalement ou de tout autre manière sur un support. De préférence, les panneaux photovoltaïques sont recouverts d'un matériau polymère hydrophobe. Des panneaux photovoltaïques double face peuvent être utilisés. La surface photovoltaïque peut être réalisée à partir de matériau photovoltaïque cristallin ou amorphe.

Par réseau d'éléments photovoltaïques flottants on entend un ensemble d'éléments photovoltaïques flottants reliés entre eux. Chaque élément photovoltaïque comporte une surface photovoltaïque et une bouée. Le réseau peut être matriciel, c'est-à-dire formé d'éléments arrangés en lignes et en colonnes. Le réseau peut aussi présenter d'autres configurations. Les éléments du réseau sont avantageusement reliés entre eux par des câbles.

Par bouée, on entend tout dispositif permettant de faire flotter au moins partiellement une surface photovoltaïque. La poussée d'Archimède exercée sur l'élément photovoltaïque flottant compense au moins partiellement le poids de cet élément. Des bouées de géométries différentes peuvent être utilisées dans le contexte de l'invention. Une bouée est réalisée de manière à permettre le réglage de l'angle de pivotement et de la position de l'élément photovoltaïque flottant.

La bouée, ou un élément de liaison entre la bouée et la surface photovoltaïque, est en outre avantageusement adaptée pour permettre un réglage de la hauteur de l'élément photovoltaïque flottant, afin de rapprocher ou d'éloigner la surface photovoltaïque de la surface de l'eau. La bouée peut être adaptée à reposer sur un sol dur tel que le fond d'un lac. La bouée peut comprendre une base de bouée pour protéger la bouée lorsqu'elle se pose sur un fond dur. Elle peut aussi être arrangée pour coopérer avec un élément d'amarrage reposant sur un sol dur, de manière à pouvoir se loger sur cet élément d'amarrage par exemple lorsque le niveau de l'eau descend. Des bouées de forme torique, ou en forme d'assemblage de cylindres aplatis et de triangles extrudés peuvent être employées. Elle peut présenter une base de bouée lui servant à reposer sur un sol dur, notamment lorsque la bouée est constituée d'un assemble de cônes extrudés dont l'extrémité inférieure est formée par la pointe d'un cône. La base de bouée peut être réalisée dans un matériau plus dur ou plus rigide que la bouée, et protéger la bouée.

Le réseau d'éléments photovoltaïques flottants comprend des câbles dont la longueur est ajustable de manière à permettre la flottaison du réseau sur un bassin aquatique lorsqu'il est plein et le positionnement sur une surface dure lorsque le bassin aquatique est vide, la base des bouées étant adaptée pour reposer sur un sol dur.La longueur des câbles qui relient les bouées entre elles est suffisante pour permettre aux bouées de toucher le fond du lac ou du réservoir lorsque ces câbles sont détendus et que le lac ou réservoir est vide ; dans ce cas, la tension résiduelle dans les câbles permet de garantir que les bouées se posent de façon ordonnée sur le fond, sans se retourner et de préférence à distances régulières les unes des autres.

La flottaison de chaque élément photovoltaïque du réseau d'éléments photovoltaïques flottants est assurée par sa ou ses bouées. En addition, la flottaison peut aussi être assurée par au moins un câble exerçant une force sur cet élément avec au moins une composante verticale orientée vers le haut. Dans ce cas, la bouée est presque suffisante pour supporter le poids de la surface photovoltaïque, seule une charge résiduelle inférieure à la charge supportée par la bouée étant supportée par les câbles.

L'avantage de cette caractéristique par rapport aux solutions de l'art antérieur réside dans le fait que la tension appliquée sur le ou les câbles est presque exclusivement dédiée au pivotement des surfaces photovoltaïques et dans une proportion bien moindre au support des éléments photovoltaïques.

Dans le contexte de l'invention, on entend par câble, un câble mécanique, un câble électrique ou une combinaison des deux types de câbles. Dans le cas d'une combinaison, l'âme du câble peut être constituée d'un type de câble et est entourée l'autre type de câble. Le câble peut être constitué par une chaîne.

Dans le contexte de l'invention, l'expression « un câble » correspond à un câble continu ou à des portions de câbles en ligne reliant entre eux plusieurs éléments photovoltaïques flottants dans une même rangée. Le câble n'est donc pas nécessairement continu, mais peut être constitué de plusieurs sections discontinues reliées entre elles par des éléments photovoltaïques, ou par d'autres éléments.

Dans le contexte de l'invention, le pivotement de la surface photovoltaïque permet d'en varier l'inclinaison autour d'un axe horizontal. Cette variation permet en particulier le suivi du soleil au cours de la journée et de la saison, en variant constamment la tension de câble afin d'orienter correctement les surfaces photovoltaïques. Lorsque les éléments photovoltaïques reposent sur un fond du lac pas nécessairement plat, la tension des câbles peut être ajustée afin de rectifier l'orientation des surfaces photovoltaïques.

Le pivotement des surfaces photovoltaïques peut aussi être utilisé pour le déneigement de la surface photovoltaïque. Des mouvements de pivotement répétés permettent notamment d'éviter la formation de glace. Lorsque l'élément photovoltaïque flottant est pris dans la glace, il est possible de prévoir une configuration de cet élément selon laquelle la neige pourra s'évacuer toute seule pendant la période hivernale. Une telle configuration peut par exemple être obtenue en inclinant suffisamment la surface photovoltaïque. Lorsque l'élément photovoltaïque flottant est pris dans la glace, il est également possible que la surface photovoltaïque et son support pivotent pour évacuer la neige alors que le reste de l'élément photovoltaïque flottant est fixe et pris dans la glace.

Dans le contexte de l'invention, le pivotement des surfaces photovoltaïques s'effectue autour d'un axe horizontal. De manière équivalente les surfaces photovoltaïques flottantes peuvent pivoter autour d'un axe quasi-horizontal, ou de tout axe non vertical, afin par exemple de modifier l'inclinaison de la surface photovoltaïque en fonction de la distance zénithale du soleil.

L'inclinaison peut aussi être contrôlée en fonction du vent, afin d'aplatir la surface en cas de fort vent par exemple.

Les éléments photovoltaïques flottants situés en périphérie du réseau c'est-à-dire sur les lignes de front du réseau, peuvent être équipés de pare-vent offrant une protection contre le vent. Ces pare vent permettent de stabiliser le réseau.

Les bouées des éléments photovoltaïques flottants peuvent être adaptées pour reposer sur un sol dur. L'adaptation peut par exemple consister en un matériau de la bouée, ou de la portion inférieure de la bouée, suffisamment solide et rigide pour ne pas se détruire ni se déformer si la bouée est posée ou même tractée sur un sol dur ou caillouteux, par exemple sur le fond d'un lac ou d'un réservoir. L'adaptation peut par exemple aussi consister en une forme de la bouée qui lui permet de ne pas se retourner, ni d'endommager la surface photovoltaïque, lorsque la bouée se pose sur un sol dur ou caillouteux. Comme mentionné, l'adaptation peut consister en une base solidaire de la bouée mais dans un matériau différent, et qui ne contribue pas à améliorer la flottaison. Il est aussi possible de munir l'élément photovoltaïque de pieds qui leur permettent de se poser de façon stable sur le fond ou sur un support d'accueil, par exemple de pieds de longueur et/ou d'inclinaison variable et qui s'adaptent automatiquement à la géométrie du fond du lac.

Les bouées peuvent coopérer avec un élément d'arrimage qui repose sur un sol dur. Les bouées peuvent se poser sur cet élément d'arrimage lorsque la bouée descend, par exemple si le niveau du lac ou du réservoir baisse. Les bouées peuvent être en permanence reliées aux éléments d'arrimage correspondants, par exemple au moyen de câbles, de sangles, ou d'autres éléments flexibles. Les éléments d'arrimage peuvent aussi être solidaires des bouées, ou de certaines bouées, et flotter avec ces bouées lorsque le lac est suffisamment rempli.

Les éléments photovoltaïques flottants comprennent en outre des bouées auxiliaires ou bouées de secours. Ces bouées peuvent être utilisées par exemple lors de la mise en place de l'élément photovoltaïque, elles lui permettent de flotter alors qu'il n'est pas encore attaché à au moins à câble. Les bouées auxiliaires peuvent également être utilisées en cas d'absence, respectivement de rupture de câble. Les bouées auxiliaires supportent en outre les éléments photovoltaïques lorsque les câbles sont détendus et n'offrent plus une traction vers le haut suffisante.

La surface photovoltaïque peut être liée de différentes manières à la bouée. Cette liaison peut notamment être de type mobile, par exemple au moyen d'une rotule. Dans ce cas, lorsque la surface photovoltaïque et son support pivotent, la bouée reste fixe. La rotule peut permettre la rotation de la surface photovoltaïque selon un seul axe horizontal, à la manière d'une charnière. La rotule peut aussi dans une variante permettre la rotation du support selon deux axes horizontaux, ou selon n'importe quel axe horizontal.

Dans un autre cas, la liaison entre la surface photovoltaïque et la bouée peut également être rigide et permettre à la surface photovoltaïque et à la bouée de pivoter de manière solidaire. Dans ce cas, le pivotement de la surface photovoltaïque est effectué en pivotant la bouée dans l'eau.

Dans un mode de réalisation, la liaison entre la bouée et la surface photovoltaïque permet de modifier l'espacement vertical entre la surface photovoltaïque et la bouée. La liaison entre la surface photovoltaïque et la bouée peut permettre un mouvement de translation de la surface photovoltaïque selon un axe, par exemple selon un axe vertical. Notamment dans le cas d'un lac vide, la surface photovoltaïque peut être placée horizontalement sur un élément d'arrimage alors que la bouée repose sur le fond qui n'est pas forcément plat. Les irrégularités du fond peuvent être importantes entre les deux extrémités de la surface photovoltaïque. Il peut alors être souhaitable d'adapter l'espacement vertical entre la bouée et la surface photovoltaïque afin de ne détériorer ni la bouée ni la surface photovoltaïque.

Les différents éléments photovoltaïques flottants du réseau peuvent être de forme carrée, rectangulaire, hexagonale ou de n'importe quelle forme adaptée à une fabrication industrielle et permettant de recouvrir efficacement la surface du plan d'eau.

Les différents éléments photovoltaïques flottants du réseau sont reliés entre eux par au moins un câble fixé sur deux côtés opposés de chaque élément photovoltaïque flottant de manière à pouvoir adapter l'angle de pivotement de ces éléments flottants en modifiant la tension du câble. Deux éléments photovoltaïques voisins peuvent par exemple être reliés par deux câbles parallèles dans un même plan horizontal.

La tension des câbles peut être ajustée par un système mécanique utilisant des mécanismes simples (poulie, frein, contrepoids). L'ajustement de la tension d'un câble agit sur l'inclinaison des éléments photovoltaïques flottants de la rangée d'éléments fixés sur ce câble.

Une surface photovoltaïque peut être positionnée de manière décentrée par rapport à la bouée qui la supporte de manière à basculer sous son propre poids lorsque la tension du câble est relâchée. Le balourd de la surface photovoltaïque la fait alors basculer sous son propre poids lorsque les câbles sont suffisamment détendus pour permettre ce pivotement.

Dans un mode de réalisation, le pivotement des surfaces photovoltaïques est obtenu en exerçant une tension sur les câbles selon une direction comportant une composante verticale. La surface photovoltaïque peut pivoter grâce à un câble agencé pour exercer une traction selon une direction oblique orientée vers le haut ou vers le bas.

Dans un mode de réalisation, deux câbles, au moins, sont fixés sur les deux côtés opposés de chaque élément photovoltaïque flottant de manière à pouvoir adapter l'angle de pivotement en modifiant la tension d'au moins un des deux câbles.

Afin de pivoter les éléments photovoltaïques flottants, la tension d'au moins un des câbles est modifiée. Cette modification est effectuée grâce à au moins un organe de réglage. Ce dernier est agencé pour enrouler ou dérouler une portion du câble.

Dans le contexte de l'invention, l'organe de réglage remplit plusieurs fonctions. Dans un cas, il est agencé pour maintenir une tension constante du câble. Plusieurs organes de réglages peuvent être prévus sur le réseau d'éléments photovoltaïques flottants.

Dans un autre cas, lorsqu'il est nécessaire de faire pivoter les éléments photovoltaïques, l'organe de réglage est susceptible de tendre ou détendre au moins un câble.

Le réglage de la tension des câbles peut être effectué de manière automatique ou manuelle.

En cas de vents forts par exemple, il sera nécessaire de placer le réseau d'éléments photovoltaïques flottants dans une position de sécurité. Dans ce cas, l'organe de réglage peut tendre ou détendre au moins les câbles, de manière automatique, afin de placer les surfaces dans cette position de sécurité. La position de sécurité peut par exemple être une position dans laquelle les surfaces sont horizontales et offrent ainsi moins de prise au vent.

Dans d'autres situations la position des éléments photovoltaïques et donc la tension d'au moins un câble peut également être modifiée automatiquement. Il s'agit notamment du suivi de la position du soleil, du déneigement des éléments photovoltaïques et de la détection de la glace.

Lorsque la température des surfaces photovoltaïques est trop élevée, il est nécessaire de les refroidir. En fonctionnement, les surfaces photovoltaïques chauffent, leur température s'élève et leur rendement électrique diminue. Leur refroidissement permet ainsi d'augmenter le rendement électrique. Les surfaces photovoltaïques sont déjà refroidies grâce au vent. Les surfaces photovoltaïques peuvent être refroidies avec de l'eau, en baissant la surface photovoltaïque ou l'ensemble de l'élément photovoltaïque flottant jusqu'à ce que les panneaux photovoltaïques entrent en contact avec l'eau. Cette opération peut être effectuée en modifiant la tension des câbles afin de rapprocher les surfaces photovoltaïques de la surface de l'eau. Dans un autre cas, de l'eau pourrait également être pulvérisée sur les panneaux photovoltaïques. Dans un autre cas encore de l'eau peut circuler en contact thermique avec les panneaux photovoltaïques.

On peut également prévoir un système permettant l'échange de chaleur entre l'eau et les surfaces photovoltaïques.

Lors des variations du niveau d'eau sur laquelle flotte le réseau d'éléments photovoltaïques, il est également avantageux de modifier la tension des câbles reliant les différents éléments photovoltaïques flottants. Cette modification de la tension permet notamment d'adapter la forme du réseau à la forme de la surface d'eau sur laquelle il flotte. En effet, une baisse du niveau d'eau d'une retenue peut entrainer une réduction de la surface d'eau sur laquelle flotte le réseau d'éléments photovoltaïques. Cette modification de la tension des câbles peut également être effectuée automatiquement.

Afin de modifier automatiquement la tension des câbles du réseau d'éléments photovoltaïques flottants, un organe de réglage comprenant un module électronique peut être prévu. Ce module électronique permet notamment de détecter le niveau d'enneigement, la présence ou le risque de glace, le degré d'ensoleillement, la vitesse du vent, le niveau du lac et/ou encore la température des surfaces photovoltaïques et de contrôler l'orientation des surfaces photovoltaïques en fonction d'un de ces paramètres, ou de n'importe quelle combinaison entre deux ou plusieurs de ces paramètres. Des consignes manuelles peuvent aussi être introduites par un opérateur.

Le module électronique peut être placé sur un organe de réglage supplémentaire, sur une des bouées, ou sur une station au bord du plan du plan d'eau. Plusieurs modules ou capteurs peuvent être prévus.

La tension des câbles peut également être modifiée manuellement.

Dans un mode de réalisation, les différents panneaux constituant une surface photovoltaïque peuvent pivoter indépendamment les uns des autres, et/ou indépendamment de la surface photovoltaïque. Des actuateurs indépendants, et/ou des câbles, peuvent être prévus pour effectuer ce pivotement.

L'invention concerne également un système d'attache d'un réseau d'éléments photovoltaïques flottants à la surface d'un bassin aquatique comprenant au moins un élément d'attache fixé dans le fond du bassin aquatique.

Dans le contexte de l'invention on entend par bassin aquatique toute étendue d'eau d'une taille suffisante pour supporter un réseau d'éléments photovoltaïques flottants tels qu'un lac naturel, un lac de barrage, une mer, un océan, etc. De préférence le bassin aquatique est constitué par un lac de barrage. En particulier des lacs de barrage situés en altitude bénéficient d'un fort ensoleillement avec des températures basses ce qui présente un avantage pour les installations photovoltaïques.

L'invention concerne également une méthode de positionnement d'un réseau d'éléments photovoltaïques flottants comportant au moins une étape d'assemblage des éléments photovoltaïques flottants à la surface d'un bassin aquatique grâce à au moins un câble et une étape de fixation de ce câble dans le fond du bassin aquatique.

Une structure comprenant au moins un câble peut être fixée dans le fond du bassin grâce à des éléments d'attache. L'étape de fixation consiste à assembler les éléments photovoltaïques flottants à cette structure de câble.

Le pivotement des éléments photovoltaïques flottants peut être répété sous la forme de secousses. Ce mode de fonctionnement permet en particulier de déneiger les surfaces photovoltaïques et/ou de limiter la formation de glace. Le réglage de la tension d'au moins un câble permet aussi d'adapter le réseau d'éléments photovoltaïques flottants aux variations du niveau d'eau du bassin aquatique. Par variations du niveau d'eau, on entend différents types de variations en hauteur du niveau d'un lac. La variation journalière du niveau d'eau d'un lac de barrage peut par exemple être de quelques mètres. La variation saisonnière peut dépasser une centaine de mètres.

Le réglage de la tension d'au moins un câble permet au réseau d'éléments photovoltaïques flottants, ou à certains éléments de ce réseau de se poser à même le sol lorsque le bassin aquatique est vide ou partiellement vide.

Au moins certains éléments photovoltaïques flottants peuvent être fixés à l'aide de moyens d'arrimage placés au fond du bassin aquatique lorsque le bassin aquatique est vide.

Une surface photovoltaïque peut être pivotée avec un angle de pivotement différent d'une autre surface photovoltaïque de sorte que la position des éléments photovoltaïques flottants constituant le réseau représente un motif. Un exemple de motif peut être un logo. Cette étape permet ainsi d'utiliser le réseau d'éléments photovoltaïques flottants comme un support de publicité pour afficher un logo géant.

Il est aussi possible de disposer les éléments photovoltaïques flottants constituant le réseau de sorte que leur répartition représente un motif.

La présente invention concerne aussi un réseau d'éléments photovoltaïques installé sur un bassin aquatique et relié aux berges du bassin par des câbles dont la longueur peut être ajustée afin de s'adapter à un niveau d'eau fluctuant caractéristique des lacs de barrage par exemple. Avantageusement, la longueur des câbles est ajustable entre une première position dans laquelle ledit réseau flotte sur ledit bassin aquatique plein et une deuxième position dans laquelle au moins certains éléments photovoltaïques reposent directement sur le fond du bassin ou sur un support (12) monté sur le fond du bassin.

### Brève description des figures

Des exemples de mise en oeuvre de l'invention sont indiqués dans la description illustrée par les figures annexées dans lesquelles :
La figure 1 illustre une vue latérale d'un élément photovoltaïque flottant selon un premier mode de réalisation.
La figure 2 illustre une vue de dessus d'un élément photovoltaïque flottant.
La figure 3 illustre une vue de côté d'un élément photovoltaïque flottant.
La figure 4 illustre une vue de côté d'un élément photovoltaïque flottant comprenant un pare-vent.
La figure 5 illustre une vue latérale d'un élément photovoltaïque flottant selon un deuxième mode de réalisation.
Les figures 6, 7 et 8 illustrent un réseau d'éléments photovoltaïques flottants placé sur un bassin aquatique présentant plusieurs niveaux d'eau.
Les figures 9, 10 et 11 illustrent un réseau d'éléments photovoltaïques flottants muni d'organes de réglage et placé sur un bassin aquatique présentant plusieurs niveaux d'eau.
Les figures 12, 13 et 14 illustrent un réseau d'éléments photovoltaïques flottants muni d'éléments d'arrimage, d'organes de réglage et placé sur un bassin aquatique présentant plusieurs niveaux d'eau.
La figure 15 illustre un réseau d'éléments photovoltaïques flottants posés sur le fond d'un bassin aquatique vide selon un mode de réalisation.
La figure 16 illustre un réseau d'éléments photovoltaïques flottants posés sur le fond d'un bassin aquatique vide selon un autre mode de réalisation.
La figure 17 illustre un réseau d'éléments photovoltaïques flottants posés sur le fond d'un bassin aquatique vide selon un autre mode de réalisation.
Les figures 18a, 18b et 18c illustrent plusieurs modes de réalisation d'un élément d'attache du réseau d'éléments photovoltaïques flottants sur le fond d'un bassin aquatique.
La figure 19 illustre un organe de réglage dans un premier mode de fonctionnement.
La figure 20 illustre un organe de réglage dans un deuxième mode de fonctionnement.
La figure 21 illustre un organe de réglage dans un troisième mode de fonctionnement.
Les figures 22, 23 et 24 illustrent un élément photovoltaïque flottant dans différentes positions.
La figure 25 illustre une vue du dessus d'un réseau d'éléments photovoltaïques flottants selon un mode de réalisation.

### Exemple(s) de mode de réalisation de l'invention

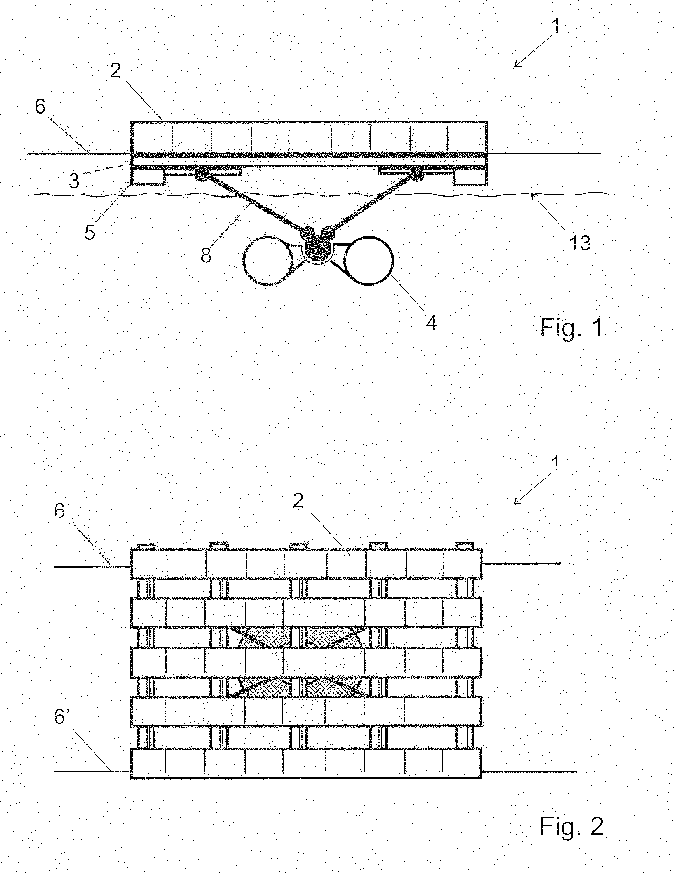

Les figures 1, 2 et 3 illustrent différentes vues d'un élément photovoltaïque flottant 1 selon un premier mode de réalisation de l'invention. Un élément photovoltaïque flottant 1 comprend une surface photovoltaïque 2, des bouées auxiliaires 5 liées à la surface photovoltaïque 2, une bouée 4 et un système de fixation 8 reliant la bouée 4 à la surface photovoltaïque 2. La flottaison d'un élément photovoltaïque flottant 1 est principalement assurée par sa ou ses bouées 4. En addition, la flottaison peut aussi être assurée par au moins un câble 6 exerçant une force sur cet élément avec au moins une composante verticale orientée vers le haut. Dans ce cas, la bouée 4 est presque suffisante pour supporter la surface photovoltaïque 2, seule une charge résiduelle inférieure à la charge supportée par la bouée 4 étant supportée par au moins un câble 6. Les bouées auxiliaires 5 supportent cette charge auxiliaire lorsque les câbles 6 sont détendus.

L'élément photovoltaïque flottant 1 est relié au réseau par au moins un câble 6 de chaque côté de la surface photovoltaïque 2. Ces câbles peuvent être liés à la bouée 4, de manière à permettre le pivotement de l'ensemble de la bouée avec la surface photovoltaïque, comme on le verra plus loin. Dans un autre mode de réalisation, ces câbles peuvent être liés à la surface photovoltaïque 2, ou au support de cette surface, afin de permettre à cette surface de pivoter indépendamment de la bouée 4 dans le cas où le système de fixation comporte une rotule.

Dans un mode de réalisation, l'élément photovoltaïque flottant 1 est relié à chacun de ses voisins dans la même rangée par deux câbles 6, 6'. Chaque câble peut être constitué par une portion de câble dont une première extrémité est reliée à un côté de la surface photovoltaïque 2 d'un premier élément photovoltaïque flottant 1 et une deuxième extrémité est reliée à un côté de la surface photovoltaïque 2 d'un second élément photovoltaïque flottant 1.

Dans un autre mode de réalisation, le câble 6 ou les câbles 6, 6' peuvent être constitués chacun par un seul câble continu sur lequel sont fixés les différents éléments photovoltaïques flottants 1 de la rangée. Un câble continu traverse alors chaque élément.

Dans un autre mode de réalisation l'élément photovoltaïque flottant 1 est relié à chacun de ses voisins dans la même rangée par un seul câble 6. La surface photovoltaïque 2 peut alors être positionnée de manière décentrée par rapport à la bouée qui le supporte de manière à basculer sous son propre poids lorsque la tension du câble est relâchée.

Une surface photovoltaïque 2 peut comprendre plusieurs rangées de panneaux photovoltaïques fixées sur un support 3. Dans le mode de réalisation représenté à la figure 2, chaque rangée présente neuf panneaux photovoltaïques et la surface photovoltaïque comprend cinq rangées de panneaux. La surface photovoltaïque peut aussi être constituée d'un seul panneau ou d'une surface arbitraire de matériau amorphe. Les panneaux photovoltaïques peuvent être des panneaux photovoltaïques cristallins du commerce. Ils sont avantageusement montés en dent de scie, chacun étant orienté de de façon oblique par rapport au support 3, avec un angle qui dépend de la latitude, de manière à assurer une direction d'illumination optimale même lorsque le support est orienté différemment. Cet angle peut avantageusement être ajusté de manière individuelle, soit manuellement lors du montage, soit au moyen de câbles, ou d'autres actuateurs permettant de contrôler cette orientation à n'importe quel moment après l'installation.

De manière générale, le nombre de rangées et de panneaux photovoltaïques par rangée est choisi afin d'obtenir une surface photovoltaïque 2 et un élément photovoltaïque flottant 1 transportables par camion, téléphérique, hélicoptère ou tout autre moyen. Par exemple, la longueur et la largeur de chaque surface photovoltaïque sont avantageusement comprises entre 2 et 25 mètres. Des éléments photovoltaïques beaucoup plus grands, par exemple de l'ordre de 100 x 100 mètres, peuvent aussi être utilisés.

L'assemblage de la surface photovoltaïque 2 avec le système de fixation 8 pour obtenir un élément photovoltaïque flottant 1 peut avoir lieu avant le transport ou sur le site d'installation du réseau.

Dans le support 3 sont prévus des moyens, non représentés, pour attacher l'élément photovoltaïque flottant 1 aux câbles 6. De préférence, on utilise un mode d'assemblage rapide grâce à des clips ou des moyens de fixation amovible le long d'un câble, par exemple par pinçage du câble. Le câble peut aussi être fixé à la bouée 4. L'élément photovoltaïque flottant est de préférence monté à une position fixe sur le câble.

Le système de fixation 8 relie le support 3 et la surface photovoltaïque à une bouée 4 de forme torique dans cet exemple.. Dans ce mode de réalisation, le système de fixation 8 comprend une rotule. Elle permet notamment de ne pas entraîner la bouée 4 lorsque la surface photovoltaïque 2 pivote sous l'action des câbles. La rotule permet à la surface photovoltaïque de pivoter autour de n'importe quel axe horizontal. Des rotules permettant à la surface photovoltaïque de pivoter selon un seul axe (charnière), ou selon un nombre discret d'axes, peuvent aussi être imaginées. Des systèmes de fixation sans rotule, dans lesquels la surface photovoltaïque reste fixe par rapport à la bouée, peuvent aussi être utilisés. Dans ce dernier cas, l'inclinaison des surfaces photovoltaïques se fait en pivotant la bouée dans l'eau, comme on le verra plus bas.

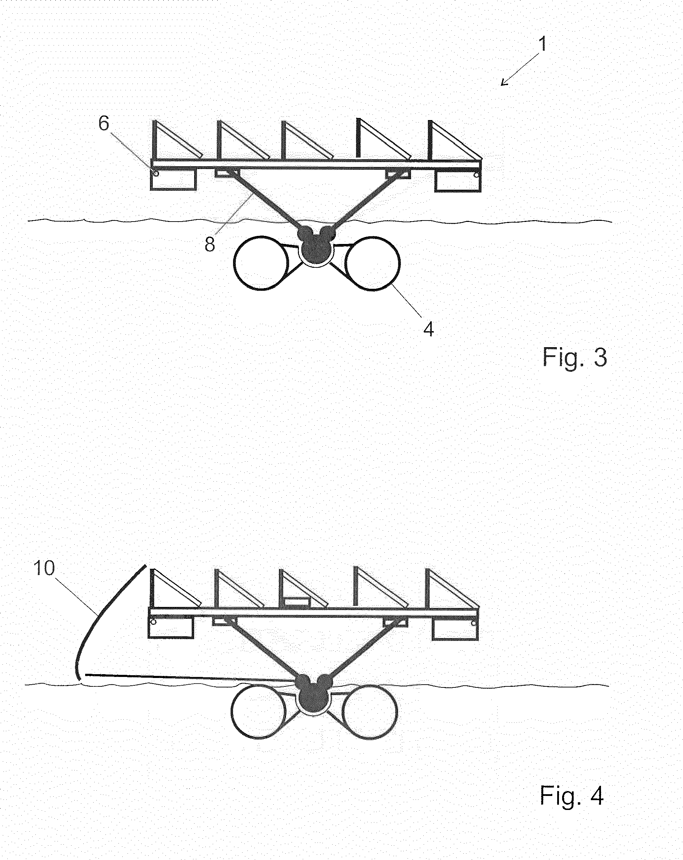

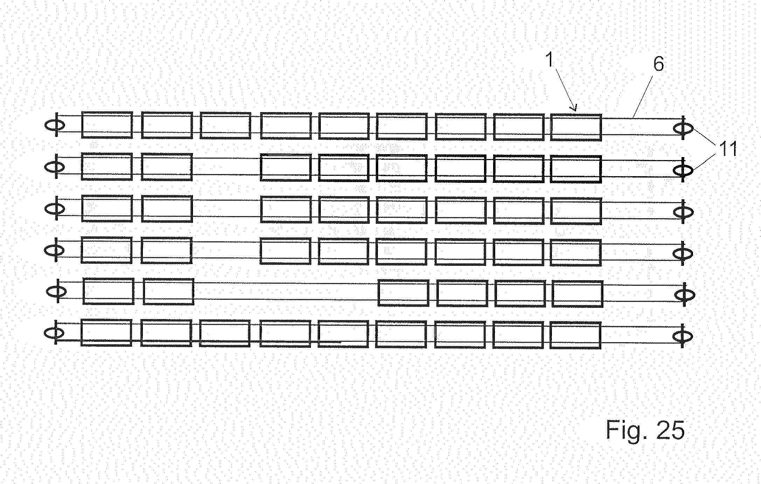

La figure 4 illustre une vue de côté d'un élément photovoltaïque flottant 1 comprenant un pare-vent 10. Comme représenté à la figure 25, les éléments photovoltaïques flottants 1 sont reliés entre eux de manière à former une matrice de lignes et de colonnes. Pour stabiliser le réseau, les éléments photovoltaïques flottants 1 des lignes extérieures sont équipés de pare vent, chaque pare-vent protégeant tous les éléments d'une rangée.

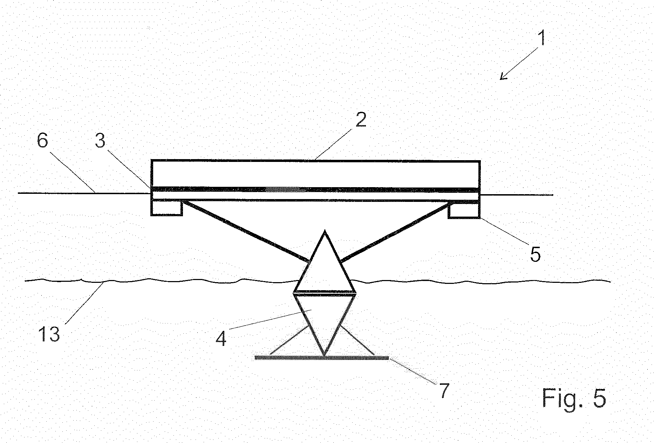

La figure 5 illustre une vue de côté d'un élément photovoltaïque flottant 1 selon un deuxième mode de réalisation. Un élément photovoltaïque flottant 1 comprend une surface photovoltaïque 2, un support 3, des bouées auxiliaires liées au support 3, une bouée 4 et un système de fixation 8 reliant la bouée 4 au support 3. Dans ce mode de réalisation la forme de la bouée 4 correspond à deux cônes superposés. Cette forme permet à la bouée de pivoter aisément autour de n'importe quel axe horizontal. Elle possède une base de bouée 7 qui est dans ce cas solidaire de la bouée. La base de bouée 7 permet de poser la bouée sur le fond du lac sans l'endommager, même si la bouée est tirée sur un fond caillouteux. La base de bouée 7 peut par exemple être réalisée en métal, par exemple en acier inox, ou en plastique dur.

Comme dans le mode de réalisation des figures 1 à 3, le système de fixation 8 de la figure 5 peut également être rigide, ou comporter une rotule permettant à la surface photovoltaïque 2 de pivoter par rapport à la bouée 4 autour d'un ou plusieurs axes de pivotement horizontaux.

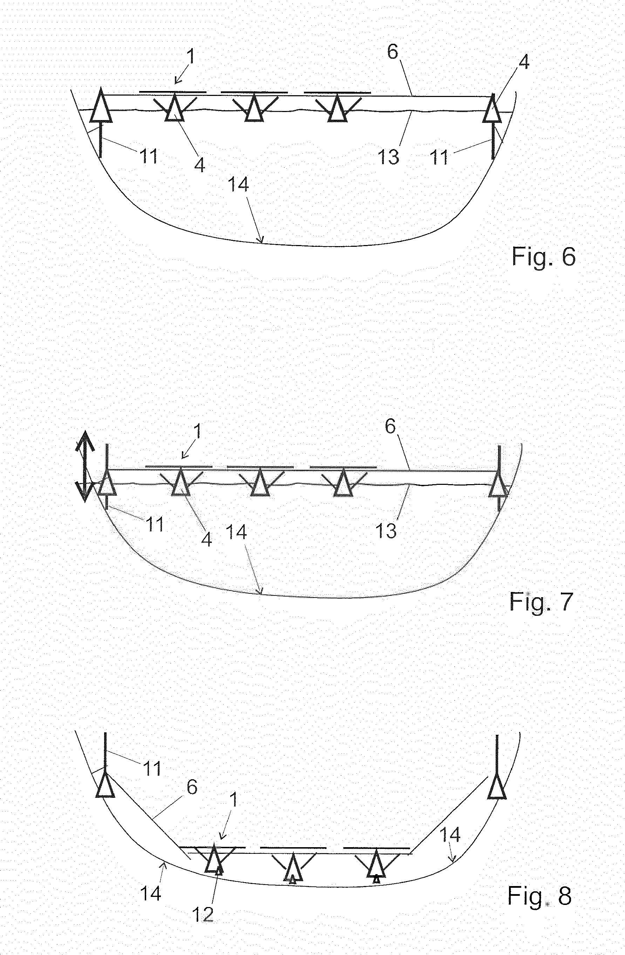

Les figures 6, 7 et 8 illustrent un réseau d'éléments photovoltaïques flottants 1 installé sur un bassin aquatique présentant différents niveaux d'eau 13. Les deux extrémités des câbles 6 sont fixées à des éléments d'attache 11 présentant une bouée 4. Les éléments d'attache peuvent par exemple être constitués par un câble tendu permettant de fixer la bouée 4 au fond, ou un mat le long duquel la bouée 4 peut coulisser.

La figure 6 correspond à un niveau d'eau 13 élevé.

La figure 7 correspond à un niveau d'eau 13 inférieur à celui de la figure 6. Les bouées 4 descendent le long des éléments d'attache 11, ce qui permet aux câbles 6 de rester tendus. La direction de déplacement est verticale sur cette figure, une direction horizontale ou oblique pourrait cependant être envisagée.

La figure 8 illustre un positionnement du réseau d'éléments photovoltaïques flottants 1 lorsque le bassin aquatique est vide ou quasi vide. Les bouées 4 des éléments d'attache 11 ont atteint l'extrémité inférieure des éléments d'attache 11. La tension des câbles 6 entre ces éléments d'attache et les éléments photovoltaïques en bord du réseau est modifiée au moyen d'éléments de détente par rapport à la situation des figures 6 et 7, afin de tenir compte du déplacement vertical des éléments 1 vers le fond 14 du bassin. L'élément de détente peut par exemple être constitué par un enrouleur permettant de modifier la longueur du câble entre les éléments photovoltaïques au bord du réseau et les éléments d'attache 11.

Dans cet exemple, des éléments d'amarrage 12 sont préalablement installés sur le fond 14 du bassin ; les éléments photovoltaïques 1 viennent se poser sur ces éléments d'amarrage fixe. Il est aussi possible de poser au moins certains éléments photovoltaïques 1 directement sur le fond.

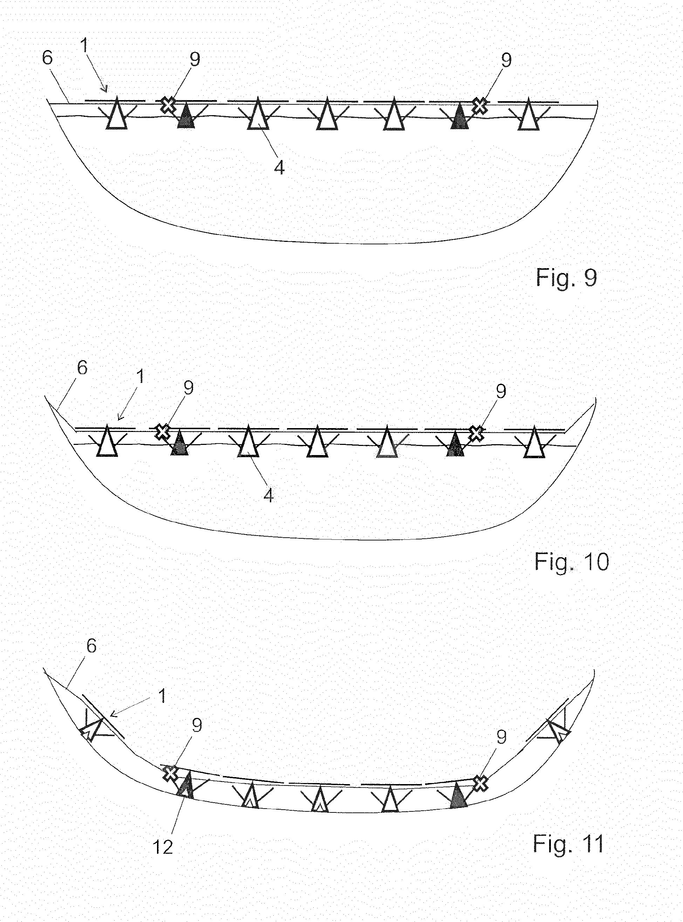

Les figures 9, 10 et 11 illustrent un autre réseau d'éléments photovoltaïques flottants 1 muni d'organes de réglage 9 et placé sur un bassin aquatique présentant différents niveaux d'eau. Dans cet exemple, les organes de réglage permettent de régler la longueur et/ou la tension de câble entre deux éléments adjacents.

La figure 9 représente un réseau d'éléments photovoltaïques flottants 1 sur un bassin aquatique avec un niveau d'eau élevé, dans lequel deux des éléments photovoltaïques flottants 1 sont reliés par un câble muni d'un organe de réglage 9 de la longueur du câble.

La figure 10 représente un réseau d'éléments photovoltaïques flottants 1 sur un bassin aquatique avec un niveau d'eau inférieur. Les câbles 6 ont été détendus entre deux éléments adjacents, au moyen des organes de réglage 9, afin de tenir compte du déplacement vertical des éléments. Dans cet exemple, des éléments d'amarrage 12 sont prévus sur le fond 14 du bassin afin de retenir les éléments photovoltaïques 1. Dans ce mode de réalisation les bouées sont fixées de manière rigide au support 3 de la surface photovoltaïque 2. Les organes de réglage peuvent par exemple être constitués par des enrouleurs permettant de modifier la longueur du câble entre deux éléments photovoltaïques.

La figure 11 représente un réseau d'éléments photovoltaïques flottants 1 sur un bassin aquatique vide. Les câbles 6 ont été détendus afin d'adapter la longueur du réseau à la distance au sol entre les deux extrémités du réseau. La longueur des câbles peut ainsi être ajustée automatiquement ou avec une intervention humaine entre la position illustrée sur la figure 9, dans lequel les éléments photovoltaïques 1 flottent sur un lac ou un réservoir plein, jusqu'à la position illustrée sur la figure 11 dans laquelle ces éléments 1 reposent sur le fond du lac ou du réservoir, ou sur des supports 12 accueillant les éléments photovoltaïques sur le fond, en passant par tous les niveaux d'eau intermédiaire. Il est aussi possible par exemple que certains éléments photovoltaïques reposent sur les berges du lac ou du réservoir partiellement vidé, tandis que d'autres continuent à flotter. Avantageusement, la tension des câbles 6 lorsque le niveau de l'eau descend est ajustée et rallongée progressivement, de manière à garantir une tension suffisante entre les différents éléments photovoltaïques et de garantir ainsi qu'ils se posent de façon ordonnée sur le fond ou sur des supports 12 prévus sur le fond, de façon régulièrement espacée, et sans se retourner. Il est par exemple possible de varier de façon importante la longueur des portions de câbles entre les berges du lac ou réservoir, mais de maintenir une distance constante, ou de prévoir une variation proportionnellement moindre, entre les éléments photovoltaïques eux-mêmes. Une variation de longueur limitée entre les éléments photovoltaïques 1 peut être prévue pour leur permettre de se poser sur un fond irrégulier. Dans un autre mode de réalisation, il est possible de prévoir des câbles comportant une portion extensible afin de compenser des petites variations de tension. Il est aussi possible de relier au moins certains éléments photovoltaïques à leur support respectif 12 par un câble non illustré de longueur variable, afin de garantir le positionnement précis de cet élément sur son support 12.

Les solutions des figures 6 à 8 peuvent être combinées à celles des figures 9 à 10 dans un même réseau.

La tension des différents tronçons de câbles 6 entre les éléments 1, et entre les éléments et le bord du bassin, peut être contrôlée de manière à corriger l'orientation des surfaces photovoltaïques lorsque les éléments photovoltaïques reposent sur un fond qui n'est pas nécessairement plat. La correction peut par exemple être apportée au moyen d'un tendeur qui tend ou détend un câble 6 lorsqu'un des éléments photovoltaïques 1 ne flotte plus. L'amplitude de la correction peut être mémorisée de manière mécanique ou électronique lors de l'installation, en fonction de l'inclinaison des surfaces photovoltaïques lorsqu'elles reposent sur le fond. La correction peut être déclenchée automatiquement par un mécanisme détectant que la bouée touche le fond, ou au moyen d'un mécanisme capable de déclencher une correction lorsque le niveau du lac descend en dessous d'un seuil.

Dans un mode de réalisation non représenté, il est possible de déplacer individuellement certains des éléments photovoltaïques flottants 1, par exemple des éléments situés dans des zones d'ombre.

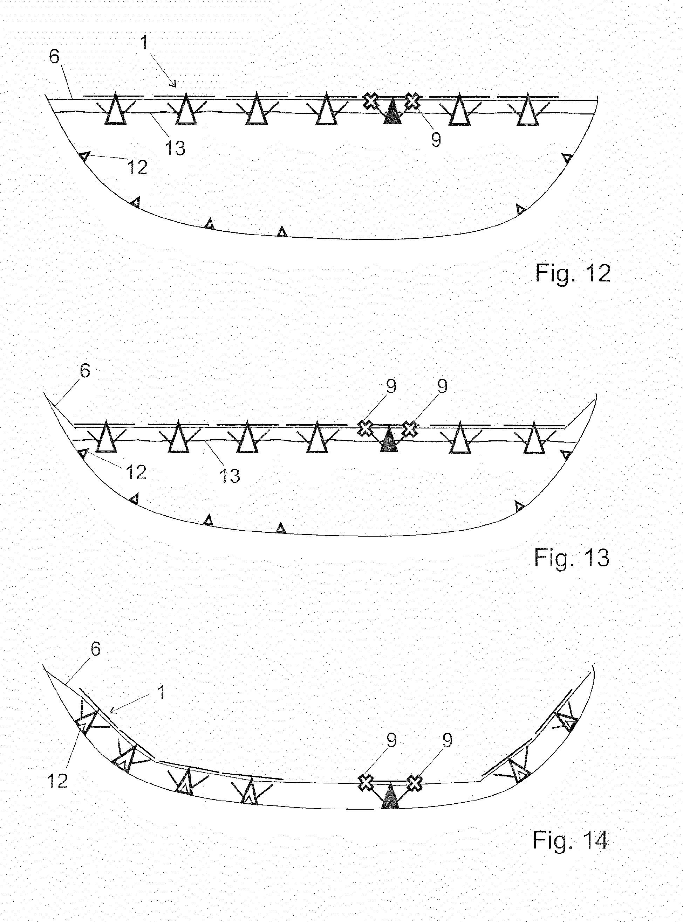

Les figures 12, 13 et 14 illustrent un réseau d'éléments photovoltaïques flottants 1 muni d'éléments d'arrimage 12, d'organes de réglage 9 et placé sur un bassin aquatique avec un niveau d'eau 13 variable.

Selon un mode de réalisation, des éléments d'arrimage 12 sont préinstallés sur le fond du bassin aquatique. Lorsque le lac se vide, une partie des éléments photovoltaïques flottants 1 peut ainsi se poser dessus. Les éléments d'arrimage sont prévus de manière à orienter correctement les éléments photovoltaïques 1 qui reposent dessus.

Selon un mode de réalisation représenté à la figure 8, les bouées 4 des éléments photovoltaïques flottants 1 se posent sur les éléments d'arrimage 12. Au moins un des éléments centraux se pose en une position non prédéterminée au fond du bassin ; cet élément est séparé de ses voisins de la même rangée par des portions de câble de longueur variable.

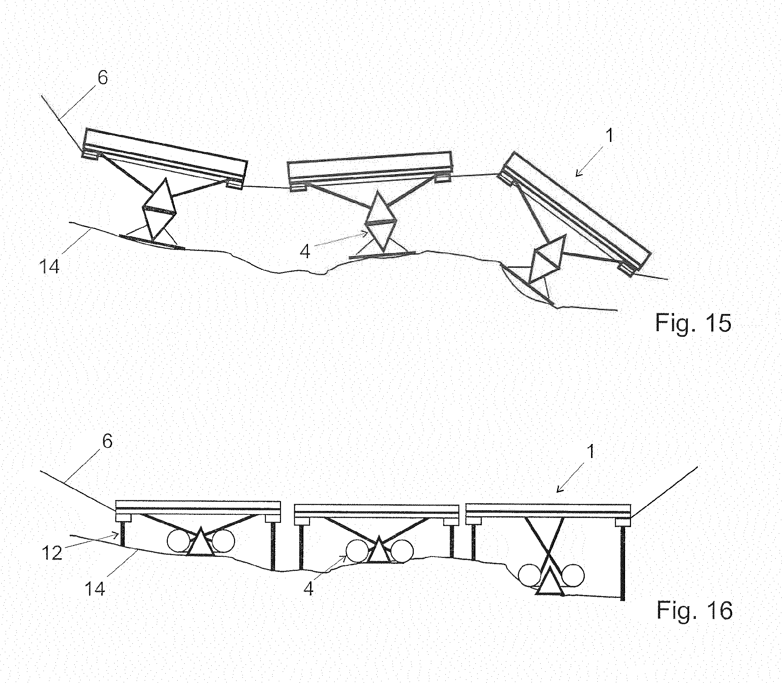

Selon un autre mode de réalisation représenté à la figure 16, les surfaces photovoltaïques 2 des éléments photovoltaïques flottants 1 se posent sur les éléments d'arrimage 12.

Selon un mode de réalisation non représenté, un élément photovoltaïque flottant 1 peut être relié à un élément d'arrimage 12 par exemple au moyen d'un câble qui permet d'assurer un posage précis de l'élément photovoltaïque sur l'élément d'arrimage.

La figure 15 illustre une portion d'un réseau d'éléments photovoltaïques flottants 1 posés sur le fond 14 d'un bassin aquatique vide selon un mode de réalisation des éléments photovoltaïques flottants 1. On voit que différentes surfaces photovoltaïques sont orientées différemment selon la pente du fond du lac. La tension des câbles 6 peut avantageusement être ajustée pour compenser au moins partiellement les distances variables entre éléments du réseau lorsque les bouées se posent sur le fond, afin d'éviter des tensions importantes. La tension des câbles 6 peut aussi être ajustée pour corriger l'orientation des différents modules photovoltaïques qui reposent sur le fond non plat

La figure 16 illustre une portion d'un réseau d'éléments photovoltaïques flottants 1 posés sur le fond 14 d'un bassin aquatique vide selon un autre mode de réalisation. Des éléments d'amarrage 12, par exemple des éléments de génie civil, sont fixés préalablement sur le fond 14 du bassin afin de permettre aux éléments photovoltaïques flottants 1 de se poser sur ces éléments d'amarrage dans une position optimale lorsque le lac se vide. Chaque bouée peut être reliée à un élément d'amarrage au moyen d'un câble vertical. La forme de l'élément d'amarrage permet de centrer automatiquement la bouée qui se pose dessus, même si cette bouée est légèrement décalée en raison de la houle ou des tensions dans les câbles par exemple. Cette figure illustre également la variation de l'espacement entre la bouée 4 et la surface photovoltaïque 2 afin d'améliorer le positionnement des éléments photovoltaïques flottants sur le fond du bassin lorsqu'il présente des différences de niveaux.

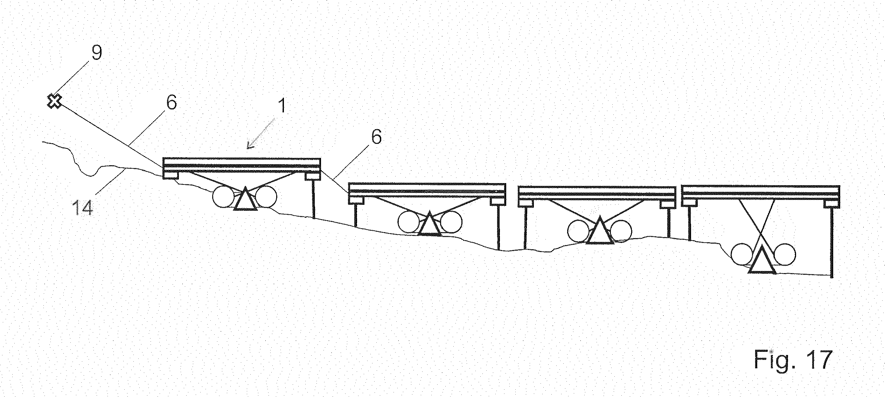

La figure 17 illustre un réseau d'éléments photovoltaïques flottants 1 posés sur le fond d'un bassin aquatique vide selon un autre mode de réalisation. Une fois les éléments photovoltaïques flottants 1 fixés aux éléments d'amarrage 12, le câble peut être libéré. Ce mode de réalisation permet notamment de poser les éléments photovoltaïques flottants 1 sur différents étages à différentes altitudes.

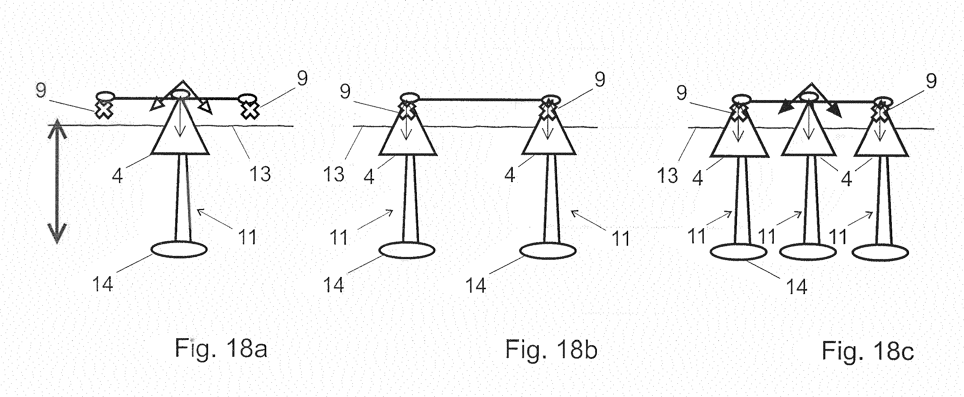

Les figures 18a, 18b et 18c illustrent plusieurs modes de réalisation d'un élément d'attache du réseau d'éléments photovoltaïques flottants sur le fond d'un bassin aquatique.

Dans cette variante de l'invention, des éléments d'attache 14 munis de bouées 4 permettent d'ajuster au niveau variable du lac les éléments de réglage 9 des câbles 6. Les éléments d'attache 14 sont de préférence posés au fond du lac et permettent ainsi d'éviter toute construction sur les rives.

La figure 18a illustre un élément d'attache 11 de type pilier, fixé sur le fond 14 d'un bassin, comprenant une bouée 4. Au sommet du pilier est fixé un axe horizontal dont les deux extrémités correspondent aux points de fixation des extrémités de deux câbles 6. Deux organes de réglage 9 sont positionnés aux extrémités des câbles 6.

La figure 18b illustre un élément d'attache 11 comprenant deux piliers, fixés sur le fond 14 d'un bassin, chacun comprenant une bouée 4. Au sommet de chacun des deux piliers est fixée une extrémité d'un câble 6. Les sommets des deux piliers sont reliés par un axe horizontal. Deux organes de réglage 9 de la tension des câbles sont positionnés aux extrémités des câbles 6.

La figure 18c illustre un élément d'attache 11 comprenant trois piliers, fixés sur le fond 14 d'un bassin, chacun comprenant une bouée 4. Au sommet de chaque pilier est fixée une extrémité d'un câble 6. Deux organes de réglage 9 sont positionnés aux extrémités des câbles 6.

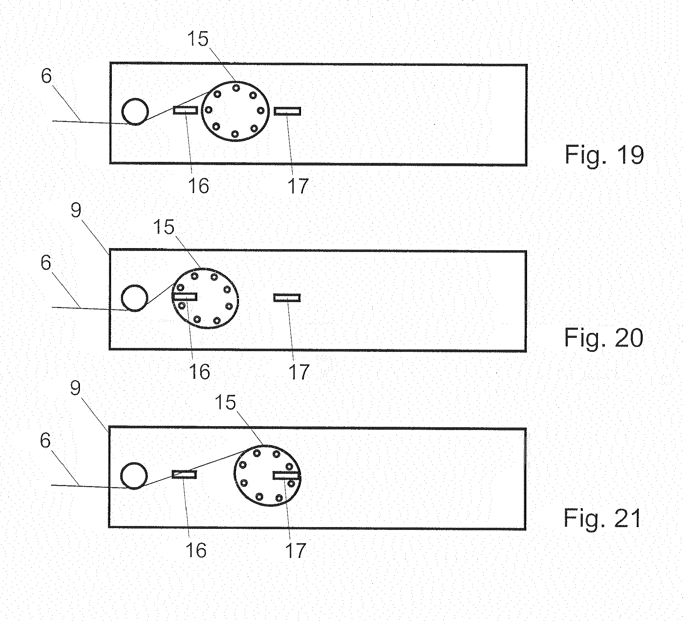

Les figures 19, 20 et 21 illustrent un exemple d'organe de réglage dans trois modes de fonctionnement différents. Cet organe permet de régler manuellement et/ou automatiquement la tension dans un des câbles 6 reliant les éléments photovoltaïques d'une rangée, ou de plusieurs rangées sur le même enrouleur 15. L'inclinaison de toutes les surfaces photovoltaïques 2 de la rangée est ainsi contrôlée au moyen du même enrouleur 15, ou d'un enrouleur 15 à chacune des deux extrémités du câble 6. Cet organe de réglage 9 peut être prévu à terre, sur le bord du plan d'eau.

La figure 19 illustre un organe de réglage 9 présentant un enrouleur 15 autour duquel est enroulée une portion du câble 6. L'organe de réglage 9 comporte un ressort pour ajuster la tension du câble 6 afin de maintenir une tension de consigne constante du câble 6 lorsque le niveau d'eau 13 du bassin varie. Dans ce mode de fonctionnement, la tension du câble 6 est ajustée sans nécessiter d'énergie supplémentaire. Elle est ajustée de préférence avec un contrepoids ou un ressort.

La figure 20 illustre le même organe de réglage 9 dans lequel l'enrouleur 15 est déplacé en direction du câble 6, en le bloquant autour d'un arrêt 16 Cette position de détente permet de détendre le câble 6 et de réduire la tension de consigne. Ce mode de fonctionnement permet notamment le pivotement des surfaces photovoltaïques 2 en particulier pour le basculement de la neige et/ou le suivi de l'ensoleillement maximum (tracking) et/ou la gestion de la formation de la glace. Ce mode de fonctionnement permet également d'abaisser le niveau des surfaces photovoltaïques 2 pour les rapprocher du niveau de l'eau et permettre le refroidissement des modules photovoltaïques par un dispositif spécifique. Ce mode de fonctionnement de l'organe de réglage 9 correspond à une translation motorisée et requiert une faible quantité d'énergie.

La figure 21 illustre le même organe de réglage 9 dans une position dans laquelle l'enrouleur est déplacé en direction opposée au câble, de manière à tendre le câble, en bloquant l'enrouleur sur le deuxième arrêt 17 afin d'augmenter la tension de consigne. Le câble 6 est alors fortement tendu, par exemple afin de placer le réseau d'éléments photovoltaïques flottants 1 dans une position de sécurité en cas de vents forts ou pour servir d'axe de pivotement dans le but de limiter l'emprise du vent.

L'organe de réglage 9 illustré sur ces figures peut être opéré manuellement. Il est aussi possible de motoriser cet organe, afin de contrôler de façon électrique la tension de l'enrouleur et/ou le déplacement de l'enrouleur dans une position de détente, de tension maximale ou intermédiaire. D'autres organes de réglage manuels, électriques ou à commande numérique peuvent être imaginés. La tension de consigne peut aussi être variée de manière continue, par exemple afin de varier l'inclinaison des surfaces photovoltaïques de façon continue. Un capteur d'ensoleillement et/ou de vent et/ou de neige peut être prévu afin de contrôler automatiquement la tension à appliquer, de manière à corriger automatiquement l'inclinaison de toutes les surfaces d'une rangée, voire de toutes les surfaces du réseau.

Des organes de réglage 9 peuvent aussi être prévus entre certains éléments photovoltaïques flottants 1, afin d'ajuster individuellement la distance entre deux éléments voisins d'une rangée. Des ressorts ou éléments à longueur variable peuvent être prévus entre différents éléments afin d'absorber des variations de tension.

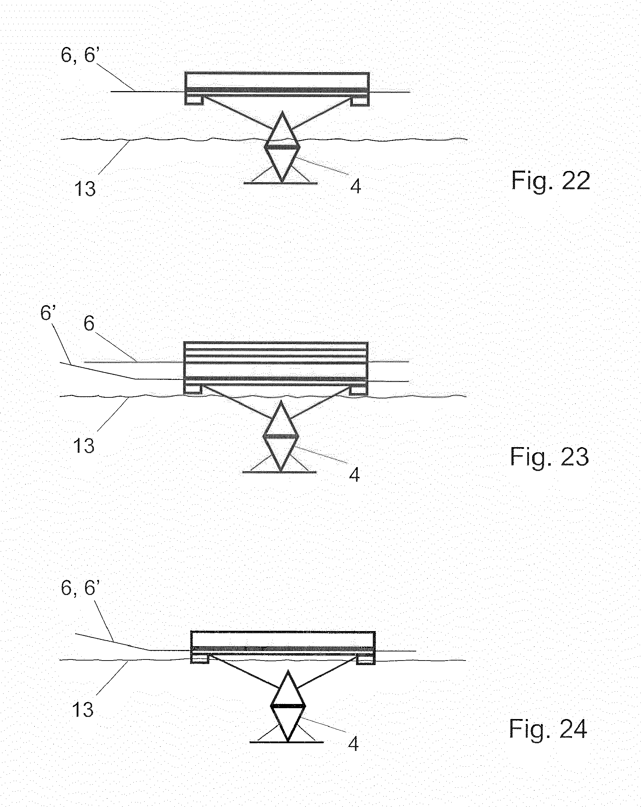

Les figures 22, 23 et 24 illustrent un élément photovoltaïque flottant 1 dans différentes inclinaisons. Cet élément comporte deux câbles 6 et 6' sur chacun des deux côtés opposés, comme dans la variante de la figure 2.

La figure 22 illustre l'élément photovoltaïque flottant 1 dans une position horizontale. Sa flottaison est assurée par la tension des deux câbles 6 et 6' de chaque côté et, dans une mesure plus importante, par la bouée située à la limite de flottaison. La tension suffisante des deux câbles 6, 6' maintient la surface photovoltaïque 2 horizontale et au-dessus de l'eau.

La figure 23 illustre la surface photovoltaïque 2 dans une position inclinée. Cette position permet notamment le suivi de l'ensoleillement maximum (tracking) ou le déneigement des surfaces photovoltaïques 2. Dans cet exemple, le câble 6' est détendu tandis que l'autre câble 6 peut être tendu ou détendu. La surface photovoltaïque 2 est ainsi déséquilibrée et pivote autour d'un axe horizontal sensiblement parallèle aux câbles 6. L'avantage du réseau d'éléments flottants de l'invention consiste à utiliser le câble 6 pour pivoter les surfaces photovoltaïques sans nécessiter une tension extrême du câble. Ceci permet ainsi au câble 6 de ne pas être relâché au centre du réseau. Le pivotement peut être obtenu par une rotation de la bouée 4 dans l'eau, ou grâce à une rotule par un pivotement de la surface photovoltaïque 2 relatif à la bouée 4 qui reste essentiellement fixe.

La figure 24 illustre l'élément photovoltaïque flottant 1 dans une position horizontale abaissée par rapport à la figure 22. Dans ce cas les deux câbles 6 sont détendus de manière à conserver une position horizontale de la surface photovoltaïque et afin de la rapprocher ainsi du niveau de l'eau 13, dans une position propice au refroidissement. Les bouées auxiliaires 5 permettent d'assurer la flottaison et la stabilité de l'élément flottant, malgré la détente des câbles 6.

L'angle de pivotement de la surface photovoltaïque est contrôlé par la tension des câbles 6 en tenant compte le cas échéant du balourd de la surface photovoltaïque. La position horizontale de la figure 22 peut être obtenue par une tension égale sur les deux câbles 6 et 6'; avantageusement, la position de fixation des câbles par rapport à l'axe de pivotement, et le balourd de l'élément, sont choisis de manière à ce qu'une tension égale sur les deux câbles 6, 6' positionne la surface photovoltaïque de façon optimale par rapport à la position moyenne du soleil au cours de l'année.

Dans les exemples illustrés, les câbles 6, 6' sont presque horizontaux lorsque la surface photovoltaïque se trouve dans la position de repos de la figure 22. La composante verticale de la force exercée par ces câbles sur les éléments 1 est donc faible. Il est possible d'attacher les câbles selon une direction oblique d'un élément à l'autre, de manière à augmenter cette composante verticale. Il est aussi possible de faire pivoter les éléments photovoltaïques flottants 1, ou les surfaces photovoltaïques sur ces éléments, au moyen de câbles perpendiculaires à l'axe de pivotement.

Dans un mode de réalisation préférentiel, les câbles 6, 6' relient tous les éléments photovoltaïques flottants d'une rangée, dont l'inclinaison est ainsi contrôlée simultanément en agissant sur ces deux câbles. Dans un mode de réalisation, au moins certains éléments photovoltaïques flottants peuvent être reliés à des câbles supplémentaires permettant de contrôler leur inclinaison indépendamment de celle des autres éléments de la même rangée. D'autre part, l'orientation d'au moins certains panneaux peut éventuellement être contrôlée individuellement, au moyen de câbles supplémentaires ou d'autres actuateurs mécaniques ou électromécaniques. Le basculement de la surface photovoltaïque 2 peut être effectué de façon continue, par la détente continue d'un des câbles 6 ou par secousses également au moyen des câbles 6. L'angle donné aux panneaux photovoltaïques, associé au traitement de surface de ces derniers, ainsi qu'au besoin à des secousses exercée au moyen des câbles 6, d'évacuer la neige. La hauteur disponible entre les panneaux de la surface photovoltaïque 2 et la surface d'eau 13, éventuellement glacée, est suffisante pour accumuler la neige tombée des modules photovoltaïques.

Il est aussi possible de faire fondre la neige des modules photovoltaïques par un apport de chaleur externe.

Dans un mode réalisation, il est prévu d'utiliser des modules photovoltaïques double-face sur les surfaces photovoltaïques 2. La face arrière des modules photovoltaïques double-face reste naturellement déneigée grâce à son orientation. Ainsi, son fonctionnement dégage de la chaleur permettant de dégager l'autre face par fonte de la neige.

La figure 25 illustre une vue du dessus d'un réseau d'éléments photovoltaïques flottants 1 selon un mode de réalisation particulier. Dans ce réseau, des éléments photovoltaïques flottants 1 ont été disposés de manière à représenter un motif ou un logo. Sur cette figure le motif correspond à la lettre « L ». Dans ce cas des câbles supplémentaires et/ou des enrouleurs supplémentaires entre les éléments photovoltaïques flottants sont nécessaires pour déplacer individuellement les éléments photovoltaïques flottants et modifier la distance entre ces éléments.

Dans une variante de ce mode de réalisation, il peut être prévu un système de stabilisation transversal de la distance entre les rangées d'éléments photovoltaïques flottants. Ce système vise à assurer une distance entre certains éléments photovoltaïques flottants, à intervalles réguliers. Ce système de stabilisation transversal peut se trouver au niveau des bouées afin de ne pas modifier l'inclinaison des surfaces photovoltaïques 2.

Dans des modes de réalisation similaires, des logos ou tout type de motifs peuvent être représentés sur un réseau d'éléments photovoltaïques flottants 1, en modifiant la position des éléments photovoltaïques flottants 1. Le réseau d'éléments photovoltaïques flottants 1 peut ainsi être utilisé comme structure d'affichage.

Dans ce mode de réalisation, le positionnement des câbles 6 se fait selon des lignes parallèles. Les éléments photovoltaïques flottants 1 sont disposés selon des lignes parallèles. On peut cependant imaginer que les câbles soient disposés différemment.

L'énergie électrique fournie par les modules photovoltaïques sous la forme d'un courant continu est transformée en courant alternatif à la tension souhaitée au moyen d'onduleurs non représentés. Ces onduleurs peuvent être aussi bien situés sur les éléments photovoltaïques flottants 1 qu'en dehors.

### Numéros de référence employés sur les figures

- 1: Elément photovoltaïque flottant
- 2: Surface photovoltaïque
- 3: Support
- 4: Bouée
- 5: Bouée auxiliaire
- 6: Câble
- 6': Câble
- 7: Base de bouée
- 8: Système de fixation
- 9: Organe de réglage
- 10: Pare vent
- 11: Elément d'attache
- 12: Elément d'amarrage (support)
- 13: Niveau de l'eau
- 14: Fond
- 15: Enrouleur
- 16: Elément d'arrêt
- 17: Elément d'arrêt

## Revendications

1. Réseau d'éléments photovoltaïques flottants (1), comprenant :
- au moins un élément photovoltaïque flottant (1),
- au moins un câble (6) pour relier ledit au moins un élément photovoltaïque flottant (1) à au moins un autre élément photovoltaïque flottant (1),
chaque élément photovoltaïque flottant (1) comprenant:
- au moins une bouée (4),
- une surface photovoltaïque (2) fixée sur ladite bouée (4),
**caractérisé en ce qu'**au moins une desdites surfaces photovoltaïques (2) peut pivoter autour d'un axe non vertical grâce à des actuateurs indépendants, et/ou des câbles,
et **en ce que** le réseau comporte des éléments d'amarrage (12) préalablement installés sur un fond (14) de bassin ; les éléments photovoltaïques flottants (1) pouvant se poser sur ces éléments d'amarrage fixe.

2. Réseau selon la revendication 1, **caractérisé en ce qu'**au moins une desdites surfaces photovoltaïques (2) peut pivoter autour d'un axe horizontal sensiblement parallèle audit au moins un câble (6), ledit au moins un câble (6) étant agencé de manière à pouvoir adapter l'angle de pivotement en modifiant sa tension.

3. Réseau selon la revendication 2, dans lequel la flottaison dudit au moins un élément photovoltaïque (2) est assurée essentiellement par ladite au moins une bouée (4) et dans une moindre mesure par ledit au moins un câble (6).

4. Réseau selon l'une des revendications précédentes, dans lequel ladite bouée (4) est liée à ladite surface photovoltaïque (2) au travers d'une rotule (8) de sorte que ladite au moins une bouée (4) reste fixe lorsque ladite au moins une surface photovoltaïque (2) pivote.

5. Réseau selon l'une des revendications 1 à 3, dans lequel ladite au moins une bouée (4) pivote de manière solidaire avec ladite au moins une surface photovoltaïque (2) lorsque la tension dudit câble (6) est ajustée.

6. Réseau selon l'une des revendications précédentes, dans lequel un câble (6) est fixé sur deux côtés opposés de chaque élément photovoltaïque flottant (1) de manière à pouvoir adapter l'angle de pivotement de ladite surface photovoltaïque (2) ou de l'ensemble dudit élément flottant (1) en modifiant la tension dudit câble (6).

7. Réseau selon la revendication 6, dans lequel ladite au moins une surface photovoltaïque (2) est positionnée de manière décentrée par rapport à ladite bouée (4) de manière à basculer sous son propre poids lorsque la tension dudit au moins un câble (6) est relâchée.

8. Réseau selon la revendication 6, dans lequel ledit au moins un câble (6) est agencé pour exercer une traction oblique sur ladite au moins une surface photovoltaïque flottant (1) pour la faire pivoter.

9. Réseau selon l'une des revendications 1 à 8, dans lequel au moins deux câbles (6) sont fixés sur deux côtés opposés d'au moins un élément photovoltaïque flottant (1) de manière à pouvoir adapter l'angle de pivotement de ladite surface photovoltaïque (2) ou de l'ensemble dudit élément flottant (1) en modifiant la tension d'au moins un desdits câbles (6).

10. Réseau selon la revendication 9, dans lequel deux câbles (6, 6') sont fixés sur deux côtés opposés de chaque élément photovoltaïque flottant (1), les deux câbles exerçant chacun une force comportant une composante verticale sur ladite surface photovoltaïque (2) et/ou sur ledit élément photovoltaïque (1), ledit élément photovoltaïque pouvant être pivoté en relâchant la tension d'un desdits câbles (6') par rapport à l'autre câble (6), de manière à abaisser la surface photovoltaïque (2) du côté du câble (6') relâché.

11. Réseau selon l'une des revendications précédentes, dans lequel ladite tension dudit au moins un câble (6, 6') est modifiée par au moins un organe de réglage (9) agencé pour enrouler ou dérouler une portion dudit câble (6).

12. Réseau selon la revendication 11, dans lequel ledit organe de réglage (9) est agencé pour maintenir une tension de consigne ajustable dudit au moins un câble (6).

13. Réseau selon l'une des revendications précédentes, comportant un organe de réglage pour ajuster automatiquement la tension dudit au moins un câble (6) en fonction de la position du soleil et/ou de l'enneigement et/ou de la formation de glace et/ou des variations du niveau d'eau sur laquelle flotte ledit réseau et/ou de la température des surfaces photovoltaïques (2).

14. Réseau selon l'une des revendications précédentes, installé sur un bassin aquatique et dans lequel la longueur des câbles (6) reliant le réseau aux berges dudit bassin est ajustable afin de s'adapter à un niveau d'eau fluctuant.

15. Méthode de positionnement d'un réseau d'éléments photovoltaïques flottants (1) selon l'une des revendications précédentes, comportant au moins une étape d'assemblage desdits éléments photovoltaïques flottants (1) à la surface d'un bassin aquatique grâce à au moins un câble (6), une étape de fixation dudit au moins un câble (6) et une étape de réglage de la tension dudit au moins un câble (6), permettant ainsi le pivotement dudit au moins un élément photovoltaïque flottant (1), et une étape de posage d'éléments photovoltaïques flottants (1) sur des éléments d'amarrage installés au fond d'un bassin.

16. Méthode de positionnement d'un réseau d'éléments photovoltaïques flottants (1) selon la revendication 15, dans laquelle le pivotement dudit au moins un élément photovoltaïque flottant (1) est répété sous la forme de secousses.

17. Méthode de positionnement d'un réseau d'éléments photovoltaïques flottants selon l'une des revendications 15 à 16, comportant une étape consistant à pivoter au moins une surface photovoltaïque (2) d'un angle de pivotement différent d'au moins une autre surface photovoltaïque (2) de manière à afficher un motif avec ledit réseau et/ou une étape consistant à disposer les éléments photovoltaïques flottants (1) constituant le réseau de sorte que leur répartition représente un motif.

## Patentansprüche

1. Netzanordnung von schwimmenden Fotovoltaikelementen (1), mit:
- mindestens einem Fotovoltaikelement (1),
- mindestens einem Kabel (6), um das besagte mindestens eine schwimmende Fotovoltaikelement (1) mit mindestens einem anderen schwimmenden Fotovoltaikelement (1) zu verbinden,
worin jedes schwimmende Fotovoltaikelement (1) aufweist:
- mindestens eine Boje (4),
- eine auf der besagten Boje (4) angebrachte fotovoltaische Fläche (2),
**dadurch gekennzeichnet, dass** mindestens eine der besagten fotovoltaischen Flächen (2) um eine nicht senkrechte Achse dank unabhängigen Aktuatoren, und/oder Kabeln, drehen kann,
und dadurch, dass die Netzanordnung vorher an einem Beckenboden (14) angebrachte Andockelemente (12) umfasst; worin die schwimmenden Fotovoltaikelemente (1) auf diese festen Andockelemente installiert werden können.

2. Netzanordnung gemäss Anspruch 1, **dadurch gekennzeichnet, dass** mindestens eine der besagten fotovoltaischen Flächen (2) um zum besagten mindestens einen Kabel (6) etwa parallele waagrechte Achse drehen kann, wobei das besagte eine Kabel (6) angeordnet ist, um den Drehwinkel durch Änderung seiner Spannung einstellen können.

3. Netzanordnung gemäss Anspruch 2, worin das Schwimmen des besagten mindestens einem Fotovoltaikelements (2) hauptsächlich durch die besagte mindestens eine Boje (4) und, in geringerem Masse, durch das besagte mindestens eine Kabel (6) gewährleistet wird.

4. Netzanordnung gemäss einem der vorhergehenden Ansprüche, worin die besagte Boje (4) mit der besagten fotovoltaischen Fläche (2) durch ein Drehgelenk (8) verbunden wird, so dass die mindestens eine Boje (4) fest bleibt, wenn die besagte mindestens eine fotovoltaische Fläche (2) sich dreht.

5. Netzanordnung gemäss einem der Ansprüche 1 bis 3, worin die besagte mindestens eine Boje (4) auf kraftschlüssig verbundene Weise mit der besagten mindestens einen fotovoltaische Fläche (2) dreht, wenn die Spannung des besagten Kabels (6) eingestellt wird.

6. Netzanordnung gemäss einem der vorhergehenden Ansprüche, worin ein Kabel (6) an zwei entgegengesetzten Seiten jedes schwimmenden Fotovoltaikelements (1) befestigt wird, um den Drehwinkel der besagten fotovoltaischen Fläche (2) oder der Einheit aus dem besagten schwimmenden Element (1) durch Änderung der Spannung des besagten Kabels (6) einstellen zu können.

7. Netzanordnung gemäss Anspruch 6, worin die besagte mindestens eine fotovoltaische Fläche (2) auf dezentrische Weise in Bezug auf die besagte Boje (4) angeordnet wird, um unter ihrem eigenem Gewicht umzukippen, wenn die Spannung des besagten mindestens einen Kabels (6) gelöst wird.

8. Netzanordnung gemäss Anspruch 6, worin das besagte mindestens eine Kabel (6) angeordnet ist, um eine schräge Zugkraft auf die besagte mindestens eine schwimmende fotovoltaische Fläche (1) auszuüben, um sie drehen zu lassen.

9. Netzanordnung gemäss einem der Ansprüche 1 bis 8, worin mindestens zwei Kabel (6) an zwei entgegengesetzten Seiten des mindestens einen schwimmenden Fotovoltaikelements (1) befestigt werden, um den Drehwinkel der besagten fotovoltaischen Fläche (2) oder der Einheit aus dem besagten schwimmenden Element (1) durch Änderung der Spannung von mindestens einem der Kabel (6) einstellen zu können.

10. Netzanordnung gemäss Anspruch 9, worin die zwei Kabel (6, 6') an zwei entgegengesetzten Seiten jedes schwimmenden Fotovoltaikelements (1) befestigt werden, worin die beiden Kabel jeweils eine Kraft mit einer senkrechten Komponente auf die besagte fotovoltaische Fläche (2) und/oder auf das besagte Fotovoltaikelement (1) ausüben, wobei das besagte Fotovoltaikelement gedreht werden kann, indem die Spannung eines der besagten Kabel (6') in Bezug auf das andere Kabel (6) gelöst wird, um die fotovoltaische Fläche (2) auf der Seite des gelösten Kabels (6') zu senken.

11. Netzanordnung gemäss einem der vorhergehenden Ansprüche, worin die besagte Spannung des besagten mindestens einen Kabels (6, 6') durch mindestens ein Reglerelement (9) geändert wird, um einen Teil des besagten Kabels (6) aufzurollen oder zu entrollen.

12. Netzanordnung gemäss Anspruch 11, worin das besagte Reglerelement (9) angeordnet ist, um einen einstellbaren Stellwert der Spannung des mindestens einen Kabels (6) zu aufrechtzuhalten.

13. Netzanordnung gemäss einem der vorhergehenden Ansprüche, mit einem Reglerelement, um die Spannung des mindestens einen Kabels (6) in Abhängigkeit von der Sonnenposition und/oder der Schneebedeckung und/oder der Eisbildung und/oder des Pegels des Wassers, auf welchem die besagte Netzanordnung schwimmt, und/oder von der Temperatur der fotovoltaischen Flächen (2) automatisch einzustellen.

14. Netzanordnung gemäss einem der vorhergehenden Ansprüche, die auf einem Wasserbecken installiert ist und worin die Länge der Kabel (6), welche die Netzanordnung mit den Rändern des besagten Beckens verbindet, einstellbar ist, um sich einem schwankenden Wasserpegel anzupassen.

15. Verfahren zur Positionierung einer Netzanordnung von schwimmenden Fotovoltaikelementen (1) gemäss einem der vorhergehenden Ansprüche, mit mindestens einem Schritt des Zusammensetzens der besagten schwimmenden Fotovoltaikelemente (1) an der Oberfläche eines Wasserbeckens mit Hilfe mindestens eines Kabels (6), einem Schritt der Befestigung des besagten mindestens einen Kabels (6) und einem Schritt der Einstellung der Spannung des mindestens einen Kabels (6), was somit das Drehen des mindestens einen Fotovoltaikelements (1) ermöglicht, und einem Schritt der Installierung von schwimmenden Fotovoltaikelementen (1) auf am Beckenboden (14) angebrachte Andockelemente.

16. Verfahren zur Positionierung einer Netzanordnung von schwimmenden Fotovoltaikelementen (1) gemäss Anspruch 15, worin das Drehen des besagten mindestens einen Fotovoltaikelements (1) auf ruckartige Weise wiederholt wird.

17. Verfahren zur Positionierung einer Netzanordnung von schwimmenden Fotovoltaikelementen (1) gemäss einem der Ansprüche 15 bis 16, mit einem Schritt der darin besteht, mindestens eine fotovoltaische Fläche (2) um einen Drehwinkel zu drehen, der zu demjenigen von mindestens einer anderen fotovoltaischen Fläche (2) verschieden ist, um ein Muster mit der besagten Netzanordnung darzustellen, und/oder mit einem Schritt der darin besteht, die die Netzanordnung bildenden schwimmenden Fotovoltaikelemente (1) so anzuordnen, dass deren Verteilung ein Muster darstellt.

## Claims

1. Array of floating photovoltaic elements (1), comprising:
- at least one floating photovoltaic element (1),
- at least one cable (6) for connecting said at least one floating photovoltaic element (1) to at least another floating photovoltaic element (1),
wherein each floating photovoltaic element (1) comprises:
- at least one buoy (4),
- a photovoltaic surface (2) fixed on said buoy (4),
**characterized in that** at least one of said photovoltaic surfaces (2) can pivot around a non-vertical axis by means of independent actuators and/or cables,
and **in that** the array comprises docking elements (12) installed beforehand on a pool bottom (14); wherein the floating photovoltaic elements (1) can be placed onto these fixed docking elements.

2. Array according to claim 1, **characterized in that** at least one of said photovoltaic surfaces (2) can pivot around a horizontal axis roughly parallel to said at least one cable (6), wherein said at least one cable (6) is arranged so as to adjust the pivot angle by modifying its tension.

3. Array according to claim 2, wherein the floating of said at least one photovoltaic element (2) is assured mainly by said at least one buoy (4) and to a lesser extent by said at least one cable (6).

4. Array according to one of the preceding claims, wherein said buoy (4) is connected to said photovoltaic surface (2) through a swivel joint (8), so that the at least one buoy (4) remains fixed when said at least one photovoltaic surface (2) is pivoted.

5. Array according to one of the claims 1 to 3, wherein said at least one buoy (4) pivots in an integrally united fashion with said at least one photovoltaic surface (2) when the tension of said cable (6) is adjusted.

6. Array according to one of the preceding claims, wherein a cable (6) is fastened on two opposite sides of each floating photovoltaic element (1) so as to be able to adjust the pivot angle of said photovoltaic surface (2) or of the assembly of said floating element (1) by modifying the tension of said cable (6).

7. Array according to claim 6, wherein said at least one photovoltaic surface (2) is positioned in a decentered manner relative to said buoy (4) so as to tilt under its own weight when the tension of said at least one cable (6) is released.

8. Array according to claim 6, wherein said at least one cable (6) is arranged to exert an oblique traction onto said at least one floating photovoltaic surface (1) to make it pivot.

9. Array according to one of the claims 1 to 8, wherein at least two cables (6) are fastened on two opposite sides of at least one floating photovoltaic element (1) so as to be able to adjust the pivot angle of said photovoltaic surface (2) or of the assembly of said floating element (1) by modifying the tension of at least one of said cables (6).

10. Array according to claim 9, wherein two cables (6, 6') are fastened on two opposite sides of each floating photovoltaic element (1), wherein the two cables each exert a force comprising a vertical component onto said photovoltaic surface (2) and/or onto said photovoltaic element (1), said photovoltaic element being capable of being pivoted by releasing the tension of one of said cables (6') relative to the other cable (6), so as to lower the photovoltaic surface (2) on the side of the released cable (6').

11. Array according to one of the preceding claims, wherein said tension of said at least one cable (6, 6') is modified by at least one regulating element (9) arranged to wind or unwind a portion of said cable (6).

12. Array according to claim 11, wherein said regulating element (9) is arranged to maintain an adjustable set-value of the tension of said at least one cable (6).

13. Array according to one of the preceding claims, comprising a regulating element to automatically adjust the tension of said at least one cable (6) according to the position of the sun and/or of the snow coverage and/or of the ice formation and/or of the variations of the water level on which said array floats and/or of the temperature of the photovoltaic surfaces (2).

14. Array according to one of the preceding claims, installed on a water pool and wherein the length of the cables (6) connecting the array to the banks of said pool is adjustable in order to adapt to a fluctuating water level.

15. Method for positioning an array of floating photovoltaic elements (1) according to one of the preceding claims, comprising at least one step of assembling said floating photovoltaic elements (1) at the surface of a water pool by means of at least one cable (6), a step of fastening said at least one cable (6) and a step of adjusting the tension of said at least one cable (6), thus enabling said at least one floating photovoltaic element (1) to pivot, and a step of placing floating photovoltaic elements (1) onto docking elements installed at the bottom of a pool.

16. Method for positioning an array of floating photovoltaic elements (1) according to claim 15, wherein the pivoting of said at least one floating photovoltaic element (1) is repeated in the form of jerking movements.

17. Method for positioning an array of floating photovoltaic elements according to one of the claims 15 to 16, comprising a step consisting in pivoting at least one photovoltaic surface (2) by a pivoting angle different from at least another photovoltaic surface (2) so as to display a pattern with said array and/or a step consisting of placing the floating photovoltaic elements (1) constituting the array so that their distribution represents a pattern.
